(19) Europäisches Patentamt
European Patent Office
Office européen des brevets

(11) EP 3 447 721 A1

(12) EUROPEAN PATENT APPLICATION

(43) Date of publication:
27.02.2019 Bulletin 2019/09

(51) Int Cl.:
G06T 3/40 (2006.01)     G06T 11/00 (2006.01)

(21) Application number: 17187764.0

(22) Date of filing: 24.08.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: AGFA NV
2640 Mortsel (BE)

(72) Inventors:
• SOONS, Joris
2640 Mortsel (BE)
• DANUDIBROTO, Adriyana
2640 Mortsel (BE)
• CANT, Jeroen
2640 Mortsel (BE)

(74) Representative: Verbrugghe, Anne Marie L.
Agfa HealthCare
IP Department 3802
Septestraat 27
2640 Mortsel (BE)

(54) **A METHOD OF GENERATING AN ENHANCED TOMOGRAPHIC IMAGE OF AN OBJECT**

(57) A neural network is trained by feeding it with a first set of tomographic images of an object and a second set of tomographic images of that object having a lower quality in at least one image quality aspect.

The lower quality tomographic images are acquired by applying a reconstruction algorithm to projection image data of lower quality for that aspect.

At inference phase, tomographic images of lower quality are enhanced by using the trained neural network.

FIG. 4

**Description**

FIELD OF THE INVENTION

The present invention is in the field of digital radiography and more in particular relates to a method to enhance image quality and reduce artefacts, more particularly in computed tomography (CT), cone beam computed tomography (CBCT) or tomosynthesis imaging systems.

BACKGROUND OF THE INVENTION

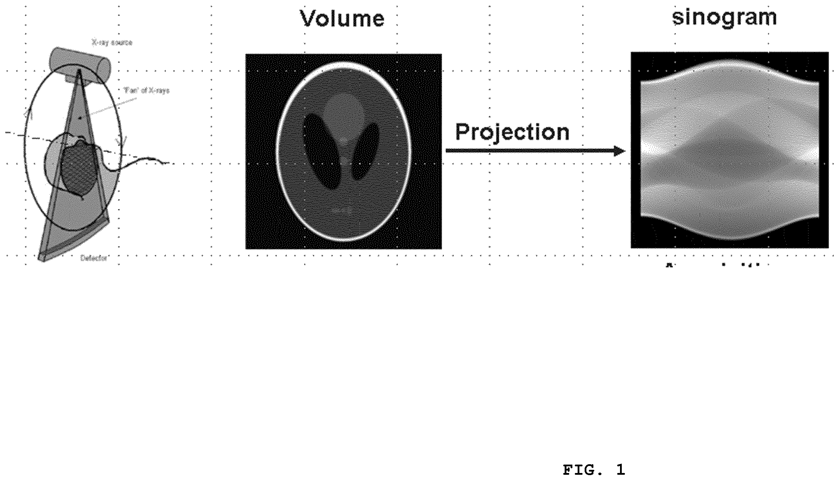

In Computed Tomography (CT) an X-ray source and a linear detector rotate around a patient or an object to acquire a sinogram being the 2-D array of data containing projections, as is shown in Fig 1. This sinogram is then used in a reconstruction step (e.g. applying the Filtered Back Projection method, known in the art) to obtain images representing virtual slices through a patient or through an object.

Cone beam Computed Tomography (CBCT) is another imaging technique in which a cone shaped beam of penetrating radiation (x-rays) is directed towards an object or a patient.
A two-dimensional radiation detector such as a flat panel detector is used to detect the x-rays that are modulated by the object or patient.
The x-ray source and the detector rotate relative to the patient or object to be imaged.
A cone-shaped beam is directed through an area of interest on the patient or the object onto an area on the detector on the opposite side of the x-ray source.
During the rotation multiple sequential planar images of the field of view are acquired in a complete or sometimes partial arc.

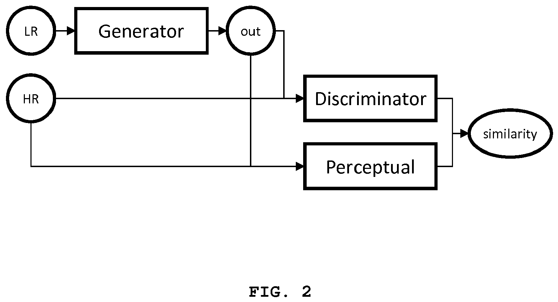

Acquired images are called projection images (Illustrated in fig. 2). These acquired images are similar to regular low dose x-ray images.
A 3D image is reconstructed by means of the projection images recorded at the different angles by applying a reconstruction algorithm (e.g. Feldkamp-Davis-Kress reconstruction).

Another application which uses a flat panel detector is tomosynthesis. In this method the x-ray source also rotates around the object or patient but the rotation angle is limited (e.g. rotation of 30 degrees).

Last decade, much research has been focused on advanced iterative reconstruction schemes which take prior knowledge into account. Iterative reconstruction algorithms have shown to reduce the dose up to 70% for some high contrast imaging tasks.

A classic iterative reconstruction approach solves the equation:

$$Arg \min_x \frac{1}{2} \| Ax - y \|_W^2 + \beta R(x) \qquad\qquad (\texttt{eq1})$$

in which x is the volume to be reconstructed, y the projection images or sinograms, A the forward projection, W defining the $L^W$-norm used, and R(x) a regularizer function which gives a certain penalty (e.g. penalty for non-smoothness) with a parameter β.

Usually, in this approach the first term, or the data term, is a fitting model of the observed projection data, while the second term, or the regularization term, often incorporates prior knowledge such as noise-characteristics, assumptions on sparsity, etc. The first term is minimized if the reconstructed volume x is consistent with the projection image y. The second term enforces a certain condition on the reconstructed volume: e.g. a total variation (TV) minimization as R(x) will give an edge preserving non-smoothness penalty, enforcing a piecewise constant condition.
Choosing a certain condition can have a profound impact on the solution and tuning the parameter β could be cumbersome. Moreover, the iterative reconstruction stops after a predefined amount of iteration steps or when a stopping criteria is met. In a practical algebraic reconstruction implementation, the iterative reconstruction (e.g. Simultaneous iterative reconstruction technique) is alternated with TVmin iterations. However, regularizers are often cumbersome to tune. Mistuning could lead to no effect of regularization or, even more severely, to the deletion of real image content such as structures.

Nowadays, flat panel detectors used in the above described imaging techniques are capable of acquiring high resolution images, with pixel sizes of $150 \mu m$ or smaller. However, the read-out speed of panels is proportional to the resolution of the images. Therefore, in applications that demand a high acquisition speed, a tradeoff has to be made between pixel resolution and readout speed.
This is conventionally performed by binning pixels (e.g. in a 2x2 binned mode, a 4 times higher frame rate can be achieved at the cost of a pixel size that is doubled).

Also in CBCT a trade-off has to be made between acquisition speed and resolution.
A higher acquisition speed results in a shorter total scan time, which reduces the risk of motion by the object or patient being imaged, but only at the expense of the resolution of the acquired 2D images.

To compensate for the loss of resolution, the acquired images can be up-sampled.

One way to perform this up-sampling is to apply a linear method, i.e. interpolation, to the image. However, interpolation methods such as nearest-neighbor, bilinear or bicubic often result in artifacts such as stair-casing, blur and ringing.

In some cases, it is possible to use non-linear methods to restore true resolution content beyond the band limit of the imaging system. This is called super-resolution. However, the forward or direct problem (downsampling) is well-posed, while the inverse problem (upsampling, overcoming the fundamental resolution limits) is in general ill-posed.

In order to overcome this instability, regularization methods are needed to get a good solution. These regularization methods use prior information or signal redundancy to compensate the loss of information.

For medical imaging we could leverage prior knowledge about the anatomy or imaging setup to improve image quality of the super resolution image. However, unlike photographic imaging, the goal of medical imaging is to facilitate diagnosis, rather than to produce visually pleasing images. Consequently, image processing artifacts are much less tolerable in medical images than in photographic applications which limit their breakthrough today.
For super-resolution, we need to estimate the missing high frequency content (edges) beyond the Nyquist frequency.

Different algorithms exist to obtain super-resolution.

In edge-directed algorithms (e.g. NEDI, DDCI) the aim is to preserve the edge by using statistical information. Another way is to restore images by using information from multiple frames. As a result, redundant information is captured and by sub-pixel image alignment and fusion, a higher spatial or temporal resolution restoration can be achieved. Tools such as ML, MAP and POCS can be applied. Such techniques are used for video processing and could easily be adapted to dynamic imaging of patients with X-rays.

Another class of algorithms are example-based methods. They exploit the internal similarities of images of the same kind of image or learn the mapping function from low to high resolution based on existing example pair.

The advent of the use of deep network such as a Convolutional Neural Network (CNN) for Super resolution (SR) was started by the work of Dong, Chao et al. "Learning a deep convolutional network for image super-resolution" - European Conference on Computer Vision. Springer, Cham, 2014 which eventually became a benchmark for other SR with deep learning.

The use of deep learning networks has shown superior performance in comparison to up-sampling by interpolation or other non-deep learning-based methods in terms of visual quality or signal to noise ratio measurement. CNN is a method that maps output to input through a series of filtering layers. Layers could be convolutional, pooling or fully connected layers, combined with a non-linear activation function such as RELU (rectified linear unit). A deeper network, and thus deep learning, are achieved by adding more layers.

CNN also have shown the potential to perform super-resolution in video sequences. In videos, most of a scene information is shared by neighboring video frames. The similarity between frames provides the data redundancy that can be exploited to obtain super-resolution

In contrast, the scene is not shared by neighboring projections in computed tomography. Nevertheless, data redundancy can be obtained by getting information from shapes that are viewed from a range of known directions. In combination with the 3D reconstruction, this approach may steer the solution to higher resolution.

It is an object of the present invention to provide a method for generating high quality tomographic images of an object or a patient, part of a patient or animal, by applying a combination of reconstruction and a trained neural network.

SUMMARY OF THE INVENTION

The present invention provides a method according to claim 1.

Specific features for preferred embodiments of the invention are set out in the dependent claims.

According to the present invention a tomographic image of an object or a patient is obtained starting from low quality projection data and using a reconstruction and a neural network to enhance that quality aspect, the neural network being trained with a first set of high quality tomographic image data and a second set of low quality tomographic image data.

In the context of the present invention, image quality comprises noise content, resolution, presence of artefacts etc. Image quality can be affected by the use of low dose at image irradiation, the use of monochromatic / polychromatic irradiation, scattering, the presence of an unwanted (disturbing) object in the image etc. Examples will be described in detail further on.

High quality refers to the quality of a certain aspect in an image that a user expects to obtain after processing.

Low quality refers to the quality of a certain aspect that the user can obtain when acquiring the image.
For example when the aspect is resolution, a high quality image will have a higher resolution than the resolution that can be obtained by the image acquisition system that is used. A well trained CNN can learn prior information or retrieve redundant information on images, allowing us to obtain high frequency information beyond the Nyquist frequency.

Further advantages and embodiments of the present invention will become apparent from the following description and drawings.

BRIEF DESCRIPTION OF THE DRAWINGS

Fig. 1     illustrates CBCT image acquisition,
Fig. 2     shows the outline of the network used in training,
Fig. 3     shows a specific embodiment consisting of 3 CNN's,
Fig. 4     schematically shows the training on tomographic images,
Fig. 5     illustrates the reconstruction.

DETAILED DESCRIPTION OF THE INVENTION

Figure 1 illustrates a cone beam image acquisition system for generating a set of 2D images that are used in a reconstruction algorithm to generate a 3D image representation of an object.

An x-rays source directs a cone of radiation towards an object (e.g. a patient). A series of two dimensional images is generated by emitting a cone of radiation at different angles. For example 400 images are generated over a range of 360 degrees.

The radiation transmitted through the object is detected by means of a 2 dimensional direct radiography detector that moves along with the cone beam (the invention is explained with regard to cone beam tomography but is likewise applicable to CT and tomosynthesis).

A reconstruction algorithm running on a computer, such as a Simultaneous iterative reconstruction technique (SIRT) is used to generate a 3D image representation of the object. Such reconstruction algorithms are well-known in the art. Next a trained neural network is used to improve image quality of the tomographic image.

The reconstructed image can then be stored in a memory or can be connected to a display device for display and examination or can be sent to a printer to generate a hard copy image or to a digital signal processor to be subjected to further processing etc.

Methodology

Supervised learning of the neural network

Figure 2 illustrates the training of a neural network (CNN) in accordance with the present invention.

A typical CNN has a training and inference stage.

During training, the network learns to enhance the low quality image from a set of examples consisting of the high quality and the corresponding low quality images or image patches. The CNN learns by adjusting the weights of the convolution kernel with the aim to optimize the performance metric.

During inference (and testing), low quality images are transformed using the trained network. Several techniques exists to obtain faster and better learning: residual learning, the use of various performance metrics (MSE, SSIM, perceptual), batch normalizing, data augmentation, ...

Calculation time can be improved by using multithreading. In this case by using Python and Theano legacy library for deep learning and running the training on GTX Titan X card.

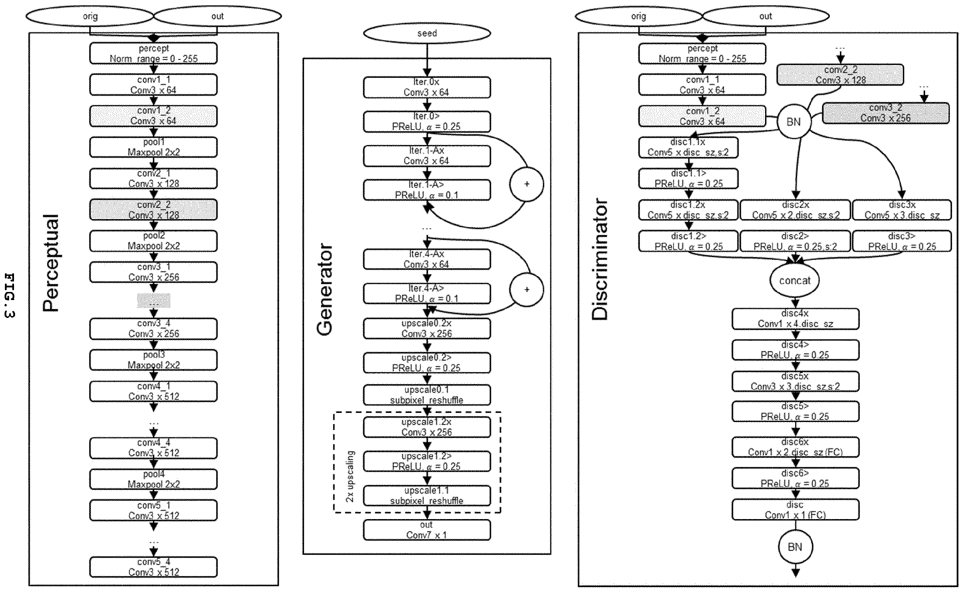

Fig. 3 shows the detailed configuration of each of the network components.

The following abbreviations are used: Conv: convolutional layer, PReLU: Parameterized Rectifier Linear Unit, Maxpool: Maximum pooling, BN: Batch Normalization, concat: concatenation, s: stride, ...

Experiments were performed using various network configurations:

- Auto-encoder (encoder-decoder) is a neural network used for unsupervised learning. It learns a (sparse) representation (encoding) for a set of data and has applications in noise reduction. A similar architecture is the U-Net.

- Generative adversarial network:

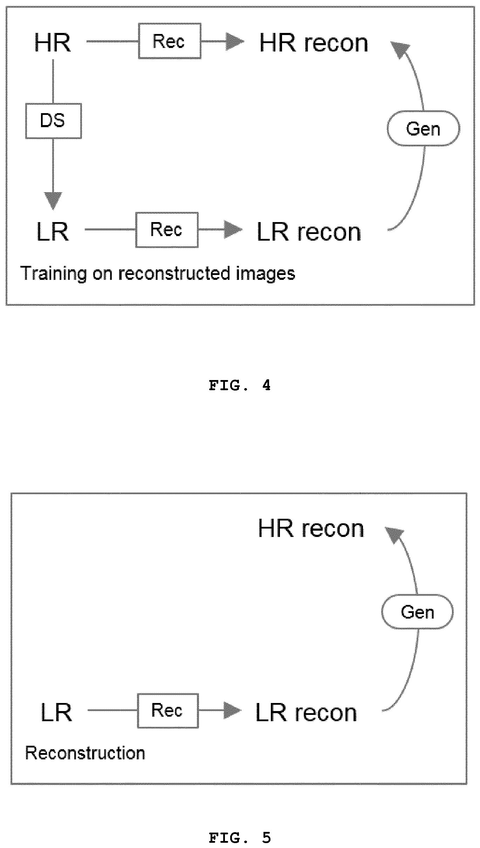

  ○ In a specific embodiment of the present invention as illustrated in fig. 4, three CNNs are used that each have a designated role, namely: Generator (Gen), Discriminator (Disc) and Perceptual).
  ○ The Gen network plays the role of generating an output (out) that mimics the high quality image version of the low quality image input, while the Disc and Perceptual networks take the role of assessing the quality of the generated image and provide it as a feedback for the Gen network in order to improve the generated image quality.

◦ The use of Gen and Disc network is based on the Generative Adversarial Network (GAN) [Goodfellow, Ian, Jean Pouget-Abadie, Mehdi Mirza, Bing Xu, David Warde-Farley, Sherjil Ozair, Aaron Courville and Yoshua Bengio. "Generative adversarial nets." In Advances in neural information processing systems, pp. 2672-2680, 2014.], that utilizes the concept of two networks competing to outperform each other, i.e. the Gen generating a convincingly high resolution (HR) realistic image and the Disc distinguishing between actual HR images and images generated by the Gen.

◦ The Perceptual network is based on the work of [Johnson, Justin, Alexandre Alahi, and Li Fei-Fei. "Perceptual losses for real-time style transfer and super-resolution"arXiv preprint arXiv:1603.08155(2016)] which aimes to provide an assessment metric for the evaluation of the generated image quality that is more aligned to the human visual perception than just taking the differences in pixel brightness (e.g. MSE). The current network layout design is based on the work of [Alexjc on https://github.com/alexjc/neural-enhance] for super-resolution of photo images.

- Training:

  ◦ retraining: network weights are initialized to the weights from a trained network (E.g. on super resolution of photographic images).
  ◦ No retraining: weights of network are initialized randomly

- Input - output

  ◦ One low quality image input - one high quality image output
  Multiple low quality image input containing current image of interest and corresponding previous and next images in the sequence, e.g. projection images from neighboring acquisition angles or neighboring image slices, and one high quality output. This approach takes advantage of the redundant information in different images.

- Residual approach with a bypass connection from input to output demands the network to reconstruct only the difference between the low quality and the high quality image without having to learn to reconstruct the LQ image itself.

- Scales:

  ◦ Single scale input and output
  ◦ Dual-scale input with a bypass connection for the low-passed input to output. The low-passed component (e.g. by Gaussian filtering) of the low quality and high quality image should be the same, thus this approach requires the network to learn to generate only the high frequency component of the HR.

- Different performance metric: Perceptual, MSE, MAD

The network can be set using any combinations of the aforementioned configuration (e.g. a network that takes in three low quality image input and uses residual and dual-scale connection).

Since the training of the network uses image patches (i.e. small subregions of the entire image, which contain only a small part of the imaged object or body part), it is expected that the learned network can be applied generically to X-ray images of various body parts. The reason behind this hypothesis is that the content of the image patches from one X-ray image would have similar or the same nature as other X-ray images even when the acquired object is different. It aligns with the idea of transfer learning which is often applied to photo images using well-trained large network such as AlexNet or GoogleNet for varying task only by re-training the final layer. Since in this case, the task is the same (e.g. super resolution) and only the object in the image is different, the same network should be directly if not with little re-training applicable. To further improve the generality of the trained network, the training data can be diversified with image pairs of varying degradation. In that way, the trained network is expected to be able to increase image quality for different grades of degradation.

Posterior reconstruction correction (Fig. 4 and 5)

The general idea is to apply a neural network on low quality (LQ) tomographic images posterior to the reconstruction (e.g. FDK, SIRT) to obtain enhanced tomographic images.

Important step is to train the neural network. In supervised learning one needs a set of examples. In this case both high quality (HQ) and degraded low quality (LQ) tomographic images are needed.

HQ and LQ tomographic images can be acquired by reconstructing HQ and LQ projection images respectively.

LQ images can be simulated by degrading existing HQ images (e.g. lower the resolution).

Another approach is to acquire LQ projection images by using a modified acquisition protocol (e.g. removing anti-scatter grid).

A third approach would be to simulate HQ and LQ acquisitions. An advantage of using such a model approach in the well-posed forward problem, forward projection in this case, is that adding more realistic physics (e.g. scatter) to the model is straightforward. The neural network will be trained to do the (ill-posed) inverse problem (e.g. reducing scatter) in the projection image and reduce artifacts in the final reconstructed tomographic image.

Below some examples of training data and the achieved enhancements are described.

1. LQ projection images can be acquired by using available HQ projection images and down sample them (DS) to LQ projection images by using binning, low pass filtering, or others.

Another way is to acquire both HQ and LQ images from the same object by using a different detector pixel size. This can be done on a real object or with a computer model.

A reconstruction algorithm is used to calculate LQ and HQ tomographic images from LQ and HQ projection images. After training the neural network on HQ and LQ tomographic images, the combination of reconstruction and the trained neural network will result in an increased resolution of the tomographic image compared to only reconstructing the LQ projection data.

2. Use a HQ tomographic images as training data set obtained from projection data with more viewing directions than the LQ data set. This can be done by removing some viewing directions in HQ data, or by acquiring two datasets of the same object. As a result, LQ tomographic image will have limited view artifacts. The neural network will reduce these artifacts after reconstruction on the LQ tomographic image. Similar, in a limited angle acquisition, limited angle artifacts can be compensated for.

3. A network is trained by using normal dose data as HQ and low dose data as LQ.

One way of acquiring low dose data is by adding noise to the high quality projection images.

Another way is to acquire both HQ and LQ projection images from the same object by using different dose setting accordingly. This can be done on a real object or with a computer model.

The trained network is used to convert the tomographic low dose images to "virtual" normal dose tomographic images

4. HQ and LQ projection images are acquired from the same object. HQ has reduced/no scattering. This can be achieved by using an anti-scatter grid.

Another way is to use a computer model approach and generate LQ images by simulating scatter (e.g. Monte-Carlo simulations, scatter kernels) and HQ by not including scatter (e.g. ray tracing).

After training the neural network on reconstructed HQ and LQ tomographic data, the combination of the reconstruction and the trained neural network will result in a reduction of scatter artefacts in the tomographic image.

5. HQ and LQ projection images are acquired from the same object. HQ is acquired with monochromatic X-rays and LQ is acquired with X-rays of another spectrum, e.g. polychromatic X-rays. This can be achieved by using computer model in which the polychromatic transmission through materials are included and excluded. After training the neural network on HQ and LQ tomographic data, the combination of the reconstruction and the trained neural network will result in a reduction of beam hardening artifacts in the tomographic image.

6. HQ projection images are acquired from a certain object, LQ projection images are acquired from the same (computer modelled) object but with some artifact inducing material (e.g. metal). After training the neural network on HQ and LQ tomographic data, the combination of the reconstruction and the trained neural network will result in a reduction of artifacts introduced by the artifact inducing material.

7. One can infer the abovementioned trained networks sequentially or one can also train the network on a combination of the abovementioned degradations.

8. Similar approach could be applied for sinograms. In contrast, the x-axis in a sinogram represents the different viewing directions. In order to obtain more information, neighboring sinograms could be taken into account.

In another embodiment, HQ and LQ tomographic images can be acquired by using different reconstructing algorithms (advanced and standard) for a set of projection images. Below some examples of training data and the achieved enhancements are described.

As standard reconstruction algorithm one can take a standard and fast filtered back projection (FBP), feldkamp davis kress (FDK) or basic algebraic reconstruction algorithm.

As advanced one, one can use a more advanced approach such as a model based iterative approach with regularization term.

Some examples known in the art are: total variation minimization, scatter correction, beam hardening correction, motion compensation, misalignment correction, truncation,etc. Another advanced reconstruction approach is likelihood-based iterative expectation-maximization algorithms. In this way, the reconstruction is carried out fast and the trained neural network will simulate the advanced regularization term. Moreover, some of the compensations need cumbersome data dependent tuning. This tuning can also be trained by the network.

Another approach is to take less iterations or larger voxel size for the standard reconstruction compared to the advanced reconstruction and let the neural network compensate for this.

## Claims

1.  A method of generating a tomographic image of an object comprising:

    - acquiring a set digital projection image data of said object that have low image quality for a given image quality aspect,
    - Reconstructing a low quality tomographic image by means of said low quality digital projection image data
    - generating an enhanced tomographic image of said low quality tomographic image with a trained neural network,
    - wherein said neural network is trained in advance with a first set of tomographic images of an image quality that is higher than said low quality for said aspect and a second set of tomographic images having low quality for said aspect.

2.  A method according to claim 1:

    - wherein said first set of low quality tomographic images are acquired by reconstructing a first set of low quality projection image data,
    - and wherein said second set of low quality tomographic images are acquired by reconstructing a second set of low quality projection image data.

3.  A method according to any of the preceding claims, wherein said second low quality projection image data is computed from the said first set of high quality projection images.

4.  A method according to any of the preceding claims, wherein said second low quality projection image data is acquired from the same object as the said first set of high quality projection image data, using an acquisition technique that results in a lower image quality for at least said image quality aspect by either irradiating said object or by modelling acquisition.

5.  A method according to any of the preceding claims, wherein said first set of low quality tomographic images comprises at least one image from a different image location in the object than the image location in the object of the second set of low quality tomographic images.

6.  A method according to claim 3 wherein said second set of low quality projection image data are obtained by subsampling projection image data of said first set.

7.  A method according to claim 1 wherein projections of said second set of low quality projection image data are obtained by adding noise to the projection image data of said first set or by modelling the addition of noise.

8.  A method according to claim 1 wherein projection data of said second set of low quality projection image data are acquired by using larger detector pixel size than for the first set of projection image data or modelling the use of a larger detector pixel size.

9.  A method according to claim 1 wherein projections of said second set of low quality projections are obtained by irradiating at lower dose than for the first set of projection image data or by modelling the use of a larger detector pixel size.

10. A method according to claim 1 wherein projections of said second set of low quality projections are obtained by irradiating with a different X-ray spectrum in addition to the first set of projections obtained by using monochromatic rays.

11. A method according to claim 1 wherein projections of said second set of low quality projections are obtained by taking into account scattering.

12. A method according to claim 1 wherein projections of said second set of low quality projections are obtained by adding artefact inducing materials to the object or by modelling such addition.

13. A method according to claim 1 wherein projections of said second set of low quality projections are a subset of the first set of projections.

14. A method according to claim 1:

    - wherein second set of low quality tomographic images are acquired by using a standard reconstruction on a set of projection image data, and

      - wherein the first set of high quality tomographic images are acquired by using an advanced reconstruction on said set of projection image data.

15. A method according to claim 14 wherein said advanced reconstruction refers to an iterative reconstruction algorithm with regularization or correction, or likelihood-based iterative expectation-maximization algorithms.

16. A method according to claim 14 wherein said advanced reconstruction refers to iterative reconstruction with more iterations than said standard reconstruction.

17. A method according to any of the preceding claims wherein said object is a human being, an animal, or a part thereof.

18. A method according to any of the preceding claims wherein said object is a computer-modelled object.

Volume

Projection

sinogram

FIG. 1

FIG. 2

FIG.3

FIG. 4

FIG. 5

Europäisches
Patentamt

European
Patent Office

Office européen
des brevets

## EUROPEAN SEARCH REPORT

Application Number

EP 17 18 7764

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/036473 A1 (SUZUKI KENJI [US]) 6 March 2014 (2014-03-06) * abstract * * figure 1 * | 1-18 | INV. G06T3/40 G06T11/00 |
| X | US 2013/051519 A1 (YANG DONG [US] ET AL) 28 February 2013 (2013-02-28) * abstract * * paragraph [0013] * | 1 | |
| X | US 2017/071562 A1 (SUZUKI KENJI [US]) 16 March 2017 (2017-03-16) * abstract * * paragraph [0066] * | 1 | |
| X | Justin Johnson ET AL: "Perceptual Losses for Real-Time Style Transfer and Super-Resolution" In: "ECCV 2016 conference", 1 January 2016 (2016-01-01), Springer International Publishing, Cham 032548, XP055431982, ISSN: 0302-9743 ISBN: 978-3-642-33485-6 vol. 9906, pages 694-711, DOI: 10.1007/978-3-319-46475-6_43, * abstract * * figure 1 * | 1 | |
| X | WO 2016/132152 A1 (MAGIC PONY TECH LTD [GB]; WANG ZEHAN [GB]; BISHOP ROBERT DAVID [GB]; S) 25 August 2016 (2016-08-25) * the whole document * | 1 | TECHNICAL FIELDS SEARCHED (IPC) G06T |
| X | WO 2016/156864 A1 (MAGIC PONY TECH LTD [GB]; WANG ZEHAN [GB]; BISHOP ROBERT DAVID [GB]; H) 6 October 2016 (2016-10-06) * the whole document * | 1 | |

-/--

The present search report has been drawn up for all claims

| Place of search | Date of completion of the search | Examiner |
|---|---|---|
| Munich | 22 February 2018 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 17 18 7764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 149 262 B1 (NAYAR SHREE K [US] ET AL) 12 December 2006 (2006-12-12) * the whole document * | 1 | |

-----

TECHNICAL FIELDS SEARCHED      (IPC)

The present search report has been drawn up for all claims

| Place of search | Date of completion of the search | Examiner |
|---|---|---|
| Munich | 22 February 2018 | Leclercq, Philippe |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 17 18 7764

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2018

| Patent document cited in search report | | Publication date | Patent family member(s) | | Publication date |
|---|---|---|---|---|---|
| WO 2014036473 | A1 | 06-03-2014 | EP | 2890300 A1 | 08-07-2015 |
| | | | US | 2015201895 A1 | 23-07-2015 |
| | | | WO | 2014036473 A1 | 06-03-2014 |
| US 2013051519 | A1 | 28-02-2013 | NONE | | |
| US 2017071562 | A1 | 16-03-2017 | NONE | | |
| WO 2016132152 | A1 | 25-08-2016 | EP | 3259910 A1 | 27-12-2017 |
| | | | EP | 3259911 A1 | 27-12-2017 |
| | | | EP | 3259912 A1 | 27-12-2017 |
| | | | EP | 3259913 A1 | 27-12-2017 |
| | | | EP | 3259914 A1 | 27-12-2017 |
| | | | EP | 3259915 A1 | 27-12-2017 |
| | | | EP | 3259916 A1 | 27-12-2017 |
| | | | EP | 3259918 A1 | 27-12-2017 |
| | | | EP | 3259919 A1 | 27-12-2017 |
| | | | EP | 3259920 A1 | 27-12-2017 |
| | | | GB | 2539845 A | 28-12-2016 |
| | | | GB | 2539846 A | 28-12-2016 |
| | | | GB | 2540889 A | 01-02-2017 |
| | | | GB | 2543429 A | 19-04-2017 |
| | | | GB | 2543958 A | 03-05-2017 |
| | | | US | 2017345130 A1 | 30-11-2017 |
| | | | US | 2017347060 A1 | 30-11-2017 |
| | | | US | 2017347061 A1 | 30-11-2017 |
| | | | US | 2017347110 A1 | 30-11-2017 |
| | | | US | 2017374374 A1 | 28-12-2017 |
| | | | WO | 2016132145 A1 | 25-08-2016 |
| | | | WO | 2016132146 A1 | 25-08-2016 |
| | | | WO | 2016132147 A1 | 25-08-2016 |
| | | | WO | 2016132148 A1 | 25-08-2016 |
| | | | WO | 2016132149 A1 | 25-08-2016 |
| | | | WO | 2016132150 A1 | 25-08-2016 |
| | | | WO | 2016132151 A1 | 25-08-2016 |
| | | | WO | 2016132152 A1 | 25-08-2016 |
| | | | WO | 2016132153 A1 | 25-08-2016 |
| | | | WO | 2016132154 A1 | 25-08-2016 |
| WO 2016156864 | A1 | 06-10-2016 | EP | 3278559 A1 | 07-02-2018 |
| | | | WO | 2016156864 A1 | 06-10-2016 |
| US 7149262 | B1 | 12-12-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Learning a deep convolutional network for image super-resolution. **DONG, CHAO et al.** European Conference on Computer Vision. Springer, Cham, 2014

- **GOODFELLOW ; IAN ; JEAN POUGET-ABADIE ; MEHDI MIRZA ; BING XU ; DAVID WARDE-FARLEY ; SHERJIL OZAIR ; AARON COURVILLE ; YOSHUA BENGIO.** Generative adversarial nets. *Advances in neural information processing systems,* 2014, 2672-2680
- **JOHNSON ; JUSTIN ; ALEXANDRE ALAHI ; LI FEI-FEI.** *Perceptual losses for real-time style transfer and super-resolution,* 2016